(19) Europäisches Patentamt
European Patent Office
Office européen des brevets

(11) EP 3 893 023 A1

(12) EUROPEAN PATENT APPLICATION

(43) Date of publication:
13.10.2021 Bulletin 2021/41

(51) Int Cl.:
G01S 13/88 (2006.01)     G01S 13/42 (2006.01)

(21) Application number: 20168241.6

(22) Date of filing: 06.04.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: European Space Agency
75738 Paris Cedex 15 (FR)

(72) Inventor: D'Addio, Salvatore
2200 AG Noordwijk (NL)

(74) Representative: MERH-IP Matias Erny Reichl
Hoffmann
Patentanwälte PartG mbB
Paul-Heyse-Strasse 29
80336 München (DE)

(54) MULTI-BEAM SCANNING RADAR ALTIMETER

(57) This application relates to a method of performing satellite-based radar altimetry. The method comprises: emitting a radar pulse towards an ocean surface in a first beam; receiving an echo of the radar pulse, after reflection off the ocean surface, in a second beam among one or more second beams, and obtaining a signal indicative of an amplitude of the echo over time; and determining a return time of the echo based on the obtained signal. The second beam is scanned with a scanning motion in a scanning direction orthogonal to a ground track of the satellite, and the echo of the radar pulse is received during the scanning motion of the second beam. The application further relates to a corresponding apparatus for performing satellite-based radar altimetry.

Fig. 4A

## Description

### Technical Field

This application relates to radar altimeters. In particular, the application relates to (fast) scanning radar altimeters for which one or more receive beams are scanned over a transverse swath. The application further relates to corresponding methods of performing radar altimetry.

### Background

Satellite altimetry, supplying continuous worldwide observations of the sea surface height, has been increasing science's knowledge of ocean circulation since the 1978 Seasat mission. Today radar altimeters have provided more than 25 years of continuous observation of the ocean dynamics.

The ocean is a turbulent environment, where, in particular, 'mesoscale' eddies (i.e., eddies of about 50 to 500 km across) are generated and move across the ocean. The goal of operational oceanography is to describe such ocean dynamics in real-time and to provide forecasts. Altimetry typically supplies the most important data for these purposes.

The most energetic kind of ocean circulation variability is associated with so-called mesoscale variability (e.g., eddies, meandering currents or fronts, squirts and filaments), that is, features on a 50 to 500 km scale, typically lasting 10 to 100 days, with currents of a few kilometers per hour. Associated ocean topography changes may be as high as 20 cm over 200 km. The energy of these mesoscale processes generally exceeds that of the mean flow by an order of magnitude or more. However, mesoscale ocean altimetry remains a challenge for satellite observations, and yet of great interest for oceanography. The capability to observe sea surface height over a large swath from a single satellite would be a key enabler for sampling the mesoscale ocean dynamics on adequate spatial and temporal scales. Conventional radar altimeters observe the ocean on a single footprint in nadir direction, and as such are not able to provide high spatial-temporal sampling of the ocean surface.

In the last years several concepts have been put forward to extend altimetry to the side of the satellite track including, among others, bi-static radar within a constellation of cooperative radar altimeters and radar interferometry from a single satellite. However, radar interferometers would need to employ two receive (Rx) antennas separated by a baseline on the order of 5 to 10 meters, which could be a major drawback for the instrument size, accommodation within a launcher, or complexity for deploying the antennas after launch.

For a single satellite, typical requirements for a large swath radar altimeter include the capability to observe sea surface height at an accuracy of less than 5 cm, with a spatial resolution of 1 km$^2$ and an across-track swath width larger than 100 km. As of today, these requirements are not met by reasonably compact instruments.

Thus, there is a need for improved techniques for radar altimetry. There is particular need for such techniques that are implementable by (reasonably) compact instruments and that enable observation of a wide across-track swath.

### Summary

In view of some or all of these needs, the present disclosure proposes a method of performing satellite-based radar altimetry and an apparatus for performing satellite-based radar altimetry, having the features of the respective independent claims.

An aspect of the disclosure relates to a method of performing satellite-based radar altimetry. The satellite may orbit Earth in Low Earth Orbit (LEO), e.g., with a height between 700 km to 800 km. The method may include emitting a radar pulse towards an ocean surface (sea surface) in a first beam. The radar pulse may be emitted by a first antenna (e.g., transmission antenna, Tx antenna). The first beam may be referred to as transmission beam (Tx beam). The radar pulse may be one among a sequence of periodically emitted radar pulses. The method may further include receiving an echo of the radar pulse, after reflection off the ocean surface, in a second beam. The second beam may be one among one or more second beams. The second beam may be generated by a (single) second antenna (e.g., reception antenna, Rx antenna). The second antenna may be an array antenna comprising a plurality of sub-apertures, for example. The sub-apertures of the array antenna may be arranged in an across-track direction. The second beam may be referred to as reception beam (Rx beam). The method may further include obtaining a signal indicative of an amplitude of the echo over time. The amplitude of the echo over time may also be referred to as an amplitude waveform or altimetry waveform. The method may yet further include determining a return time of the echo based on the obtained signal. The second beam may be scanned with a scanning motion in a scanning direction orthogonal to a ground track of the satellite. Scanning the beam may also be referred to as performing a sweep with the beam. Further, the echo of the radar pulse may be received during the scanning motion of the second beam. The method may also include maintaining an internal clock as reference for timings of radar pulse emission and return times.

The proposed method relates to a radar altimeter technique that is capable of measuring sea surface height over a wide swath in the across-track direction and that employs a single Rx antenna. By scanning the Rx beam in the across-track direction, it can be scanned towards the radar pulse as it propagates on ground (i.e., on the sea surface) from nadir in the across-rack direction. Thereby, the observed amplitude waveform of the received echo is time-compressed to show a more pronounced peak. This time-compression can be achieved with a reasonably sized antenna, i.e., the time-compression achieved by the scanning motion does not require a particularly narrow Rx beam. Moreover, the time-compression of the amplitude waveform allows to identify the altimetry point that is used for determining the return time of the echo with greater accuracy, which in turn translates into a higher accuracy of measuring the sea surface height. Since the Rx beam is scanned in the across-track direction, a wide swath of the sea surface can be covered.

In some embodiments, the second beam may be scanned in the direction orthogonal to the ground track of the satellite, from a maximum angular excursion from nadir, towards nadir. That is, the scanning motion of the second beam may be opposite to a direction of propagation of a locus at which the spherical radar pulse impinges on the ocean surface (i.e., the intersection of the radar pulse with the ocean surface). It is understood that the echo of the radar pulse is received while the second beam is scanned towards nadir.

In some embodiments, a scan speed of the scanning motion of the second beam may depend on a propagation speed, along the ocean surface, of a locus at which the radar pulse impinges on the ocean surface. The propagation speed is a function of an angle of excursion from nadir. Hence, the scan speed may depend on an angle of excursion of the second beam from nadir. For example, the scan speed may be higher for a small angle of excursion from nadir and lower for a large angle of excursion from nadir.

In some embodiments, the scan speed may be a predetermined multiple of the propagation speed, along the ocean surface, of the locus at which the radar pulse impinges on the ocean surface. For example, the predetermined multiple for the angle-dependent scan speed may be in the range from 50 to 200 or 100 to 200.

In general, higher scan speeds towards the radar pulse traveling on ground will translate into a more compressed amplitude waveform for the received echo. On the other hand, the Rx beam will capture only part of the power of the echo if the scan speed towards the radar pulse exceeds a certain threshold, which will lead to a degraded signal-to-noise ratio. By fixing the scan speed to be a multiple of the elevation angle-dependent propagation speed of the radar pulse, an optimum trade-off between pulse compression and received power can be achieved.

In some embodiments, the radar pulse may be a chirp pulse (e.g., a sweep signal) with a predetermined frequency profile (or wavelength profile) over time. The chirp may be an up-chirp or a down-chirp, for example. The second beam may be generated by means of digital beamforming, using an array antenna with a plurality of sub-apertures. The sub-apertures of the array antenna may be arranged in an across-track direction. The digital beamforming may include applying time-dependent phase shifts to the echo signals received by respective sub-apertures to cause the scanning motion of the second beam. The digital beamforming may further include applying frequency-dependent phase shifts to said echo signals, such that different frequency components of the echo add up constructively in the obtained signal for different pointing directions within the second beam. Frequencies of the frequency components of the echo for which there is constructive interference may vary for pointing directions from a leading edge of the second beam in the scanning direction to a trailing edge of the second beam in the scanning direction in accordance with the frequency profile of the chirp pulse. The frequency-dependent phase shifts may be static (i.e., not change with time).

The above configuration implements a frequency-dependent pointing pattern within the second beam that is tailored to the frequency profile of the radar pulse. Thereby, the amount of reflected power that is captured by the Rx beam can be optimized, thus relaxing the aforementioned trade-off between pulse compression and received power.

In some embodiments, the method may further include receiving echoes of the radar pulse, after reflection off the ocean surface, in a plurality of second beams, and obtaining respective signals indicative of amplitudes of the echoes overtime. The method may further include determining return times of the echoes based on the respective obtained signals. The second beams may be scanned with scanning motions in a direction orthogonal to a ground track of the satellite. The echoes of the radar pulse may be received during the scanning motions of the second beams. Therein, only those second beams may be active at a time that point towards a location on the ocean surface that is expected to be currently illuminated by the radar pulse. Here, a beam being active may be seen in the context of digital beamforming in that only those phase combinations of array element signals are read out that correspond to the active beams. The method may include generating the one or more second beams by digital beam forming. This may imply using an array antenna for generating the second beams. Further, determining return times of the echoes based on the respective obtained signals may involve determining differences (difference signals, e.g., difference waveforms) between signals (e.g., waveforms) obtained for pairs of consecutive second beams among the plurality of second beams. The pairs of consecutive (or contiguous) second beams may include those second beams that in the course of scanning consecutively pass a certain across-track position on ground.

Thus, a plurality of Rx beams can be used to sweep the across-track swath, which will lead to improved spatial-temporal resolution. Since only one (or few) of the Rx beams need to be active at a given time instant, complexity of the beamforming can be kept at a minimum, leading to a more efficient system architecture.

In some embodiments, the first beam may be a wide beam. Additionally, or alternatively, the first beam may be pointed in the nadir direction. The beam width (e.g., opening angle) of the first beam may be chosen to cover a swath that is of interest for the radio altimetry. Thus, despite the scanning motion of the Rx beam(s), only a single static Tx beam is required.

In some embodiments, the one or more second beams may include a beam that is fixedly pointed in the nadir direction. Thereby, an amplitude waveform of a nadir echo can be generated, for reference purposes.

In some embodiments, the method may further include calculating a distance to a location on the ocean surface that is covered by the second beam at the determined return time. Calculating the distance may be based on the timing of emission of the radar pulse and the determined return time. The distance may be a distance between a reference position on/within the satellite and the location on the ocean surface.

Another aspect of the disclosure relates to an apparatus for performing satellite-based radar altimetry. The apparatus may be an instrument (e.g., scientific instrument) for performing radar altimetry, for example. It may be arranged (e.g., mounted) or arrangeable (e.g., mountable) aboard a satellite. The apparatus may include a first antenna for emitting a radar pulse towards an ocean surface in a first beam. The apparatus may further include a second antenna for receiving an echo of the radar pulse, after reflection off the ocean surface, in a second beam. The second beam may be one among one or more second beams. The second antenna may be an array antenna comprising a plurality of sub-apertures. The first and second antennas may be distinct antennas. This may include the case that the first antenna is embedded in, but does not fully correspond to, the second antenna. The apparatus may yet further include a beamforming unit coupled to the second antenna for processing echo signals received by respective sub-apertures. The beamforming unit may coherently process the echo signals. It may correspond to a digital beamforming network, for example. The beamforming unit may be adapted to apply time-dependent phase shifts to the echo signals received by respective sub-apertures to cause a scanning motion of the second beam in a scanning direction orthogonal to a ground track of the satellite. The (time-dependent) phase shifts may be added to maximize the obtained signal reflected from a given target (point target) on the ocean surface, where that target defines a pointing direction of the second beam. The beamforming unit may be further adapted to sum the phase-shifted echo signals for obtaining a signal indicative of an amplitude of the echo of the radar pulse over time. Therein, the echo of the radar pulse may be received during the scanning motion of the second beam. The obtained signal may allow determination of a return time of the echo of the radar pulse, which in turn may allow calculation of a distance to a location on the ocean surface that is covered by the second beam at the determined return time. This determination and/or calculation may be performed aboard the satellite, or it may be performed on ground, after transmission of the relevant information from the satellite to ground. The second antenna may be adapted to receive echoes in a plurality of second beams. In this case, only those second beams may be active at a time (in the sense that appropriate phase shifts for that second beam are applied by the beamforming unit) that point towards a location on the ocean surface that is expected to be currently illuminated by the radar pulse.

In some embodiments, the second beam may be scanned in the direction orthogonal to the ground track of the satellite, from a maximum angular excursion from nadir, towards nadir.

In some embodiments, a scan speed of the scanning motion of the second beam may depend on a propagation speed, along the ocean surface, of a locus at which the radar pulse impinges on the ocean surface.

In some embodiments, the radar pulse may be a chirp pulse with a predetermined frequency profile. The beamforming unit may be further adapted to apply frequency-dependent phase shifts to the echo signals received by respective sub-apertures of the second antenna, such that different frequency components of the echo of the radar pulse add up constructively in the obtained signal for different pointing directions within the second beam. In particular, frequencies of the frequency components of the echo for which there is constructive interference may vary for pointing directions from a leading edge of the second beam in the scanning direction to a trailing edge of the second beam in the scanning direction in accordance with the frequency profile of the chirp pulse.

It will be appreciated that apparatus features and method steps may be interchanged in many ways. In particular, the details of the disclosed apparatus (e.g., instrument or satellite) can be realized by the corresponding method of operating the apparatus, and vice versa, as the skilled person will appreciate. Moreover, any of the above statements made with respect to the apparatus are understood to likewise apply to the corresponding method, and vice versa.

**Brief Description of the Figures**

Example embodiments of the disclosure are explained below with reference to the accompanying drawings, wherein

**Fig. 1** schematically illustrates an example of idealized radar altimeter waveform formation for a nadir-pointing radar altimeter;

**Fig. 2** schematically illustrates an example of possible nomenclature and conventions for use in describing the radar observation geometry;

**Fig. 3A** schematically illustrate an example of radar altimeter waveform formation for an off-nadir radar altimeter;

**Fig. 3B** illustrates an example of an altimetry waveform resulting from the radar altimeter waveform formation according to **Fig. 3A;**

**Fig. 4A** schematically illustrates an example of radar altimeter waveform formation for a beam scanning radar altimeter according to embodiments of the disclosure;

**Fig. 4B** illustrates an example of an altimetry waveform resulting from the radar altimeter waveform formation according to **Fig. 4A;**

**Fig. 5A** is a graph illustrating an example of a propagation speed of a radar pulse on ground as a function of elevation angle;

**Fig. 5B** illustrates examples of altimetry waveforms obtained for different scanning speeds;

**Fig. 6A and Fig. 6B** schematically illustrates examples of a relation between a scanned receive beam and a radar pulse propagating on ground according to embodiments of the disclosure;

**Fig. 7** schematically illustrates an example of a scanned receive beam with frequency-dependent pointing according to embodiments of the disclosure;

**Fig. 8** schematically illustrates an example of synthetic antenna footprints obtainable with a radar altimeter according to embodiments of the disclosure;

**Fig. 9** schematically illustrates the impact of a beam pointing error on a measured height;

**Fig. 10A** illustrates examples of altimetry waveforms obtained by consecutive Rx beams for different elevation angles;

**Fig. 10B** illustrates examples of altimetry waveforms obtained as differences between altimetry waveforms of consecutive Rx beams for different elevation angles;

**Fig. 11** schematically illustrates a block diagram of a radar altimeter according to embodiments of the disclosure;

**Fig. 12A** illustrates examples of altimetry waveforms obtained for different elevation angles, assuming a given altimeter configuration and a peak Tx power of 500 W;

**Fig. 12B** illustrates examples of achievable height precision assuming a given altimeter configuration and a peak Tx power of 500 W;

**Fig. 13A** illustrates examples of altimetry waveforms obtained for different elevation angles, assuming a given altimeter configuration and a peak Tx power of 1 kW; and

**Fig. 13B** illustrates examples of achievable height assuming a given altimeter configuration and a peak Tx power of 1 kW.

## Detailed Description

In the following, example embodiments of the disclosure will be described with reference to the appended figures. Identical elements in the figures may be indicated by identical reference numbers, and repeated description thereof may be omitted for reasons of conciseness.

A variety of techniques are conceivable for observing the sea surface height over a large swath from a single satellite in space. These techniques include, for example, constellations of nadir altimeters, interferometric concepts, GNSS-R altimeters, and others.

A conventional nadir-pointing radar altimeter (or nadir radar altimeter) measures the sea surface height by transmitting a train of radar pulses (either coherently or incoherently) and measuring the time at which the pulses reflected from the ocean surface are received. Under the assumption that the radar position is accurately known and the pulse travelling speed is known, the distance between the transmitter/receiver and the reflecting sea surface, and thus the sea surface height (SSH) can be accurately determined. A determination of the propagation speed/velocity, with corrections for example for dry troposphere, wet troposphere, ionosphere, etc., is known in the field. For the present purposes, time and range will be treated as equivalents.

For nadir radar altimeters, the sea reflected path with minimum range is the one associated to the reflection from the specular point, which is the sub-satellite nadir point. Nadir radar altimeters are capable of measuring the sea surface height only at the nadir sub-satellite point. In practice, the SSH is obtained in relative terms with respect to a reference surface, usually given by the Earth ellipsoid model (e.g., the WGS84 reference ellipsoid) or the Geoid.

However, the shape of the echo return reflected by the ocean surface differs significantly from the shape of the transmitted radar pulse, due to the distributed and geographically extended nature of the sea surface scattering process. The received radar echo is matched filtered (e.g., pulse compressed, either on-board or on-ground) with the transmit pulse and yields to the so called altimetry waveform. The transmit pulse may be a "chirp" linearly frequency modulated pulse, for example, but other pulse coding/modulation schemes could likewise be used. The altimetry waveform can be employed for estimating the time of reception of the echo reflected from the nadir minimum distance path.

In essence, the altimetry waveform is a measurement profile of backscattered power as a function of range (or equivalently, time). Its profile may be seen as the convolution of the point target (also referred to as "scatterer") response of the processed radar pulse (defined hereinafter as $g(t)$) and the impulse response of the rough, scattering surface (defined hereinafter as $w(t)$).

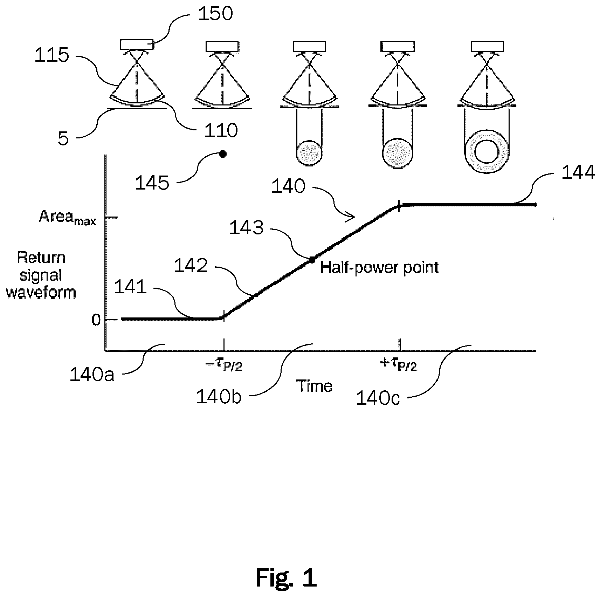

A practical explanation of the formation of a radar altimetry waveform is schematically illustrated in **Fig. 1** for the ideal case of a flat surface (e.g., sea surface, ocean surface) 5. Such flat surface still produces diffuse scattering, and otherwise the power would be scattered only from the nadir point, yielding an altimetry waveform that is a simple replica of the transmitted pulse. In the example of **Fig. 1,** a radar signal pulse 110 is emitted from an altimeter antenna (or generally, altimeter instrument) 150 in a Tx beam 115. The radar pulse 110 impinges on the sea surface 5 during a given duration $\tau_P$ and, while doing so, intersects a circular area 145 of the sea surface 5 that is gradually increasing in size from a first timing (e.g., at $\tau_P/2$ at which the front-edge of the (spherical) pulse 110 intersects the sea surface 5, until the complete pulse 110 intersects with the sea surface 5 at a second timing (e.g., at $+\tau_P/2$). From that moment onwards, the intersected surface (or intercepted surface, intercepted area, illuminated area) is not anymore a circle but an annular region, but it maintains the same area. The reflected power is illustrated by graph 140 in **Fig. 1.** It is proportional to the intercepted area, which thus leads to the shape represented by graph 140. Accordingly, the shape of the reflected power has a baseline part 141 for timings 140a before the first timing, for which the reflected power is given by the noise floor. Contiguous to the baseline part 141, the shape comprises a leading edge part 142 for timings 140b between the first timing and the second timing, during which the reflected power continuously rises. The leading edge part 142 includes a half-power point 143 of the reflected power. Contiguous to the leading edge part 142, the shape comprises a plateau part 144 for timings 140c after the second timing, during which the radar pulse 110 intersects the sea surface 5 in an annular region that maintains the same area. As can be seen from **Fig. 1,** when neglecting the signal drop-off due to increasing distances and drop-off of antenna pattern, the reflected power remains constant after the maximum area is reached at the second timing. However, in practice this may not be the case, due to the aforementioned reasons (e.g., mainly antenna pattern drop-off, reflection coefficient drop-off, and free-space loss due to slant-range increase).

The power waveform represented by graph 140 is the simplest representation of a radar altimeter power waveform and is referred to as the "flat-surface" (FS) surface response. It is noted that in this case, the slope of the leading edge of the waveform is simply proportional to the duration of the transmitted pulse $\tau_P$, which in this ideal case is a rectangular pulse.

In general, the power altimetry waveform $Y(t)$ can be expressed by a convolution of an impulse response function of the ocean surface (time-space function) $w(t)$ and an impulse response function of the radar pulse $g(t)$. The time-space function $w(t)$ is dependent on several instrument parameters and sea surface scattering parameters, including the sea surface distance, Tx and Rx antenna gain patterns, and/or a sea surface normalized scattering coefficient (reflectivity) $\sigma_0$. The function $g(t)$ is typically the pulse compressed response function of a linearly frequency modulated pulse, for example of a chirp pulse. The power altimetry waveform can be thus analytically represented as

$$Y(t) = w(t) * g(t) = \int w(\tau)g(t-\tau)d\tau \qquad (1)$$

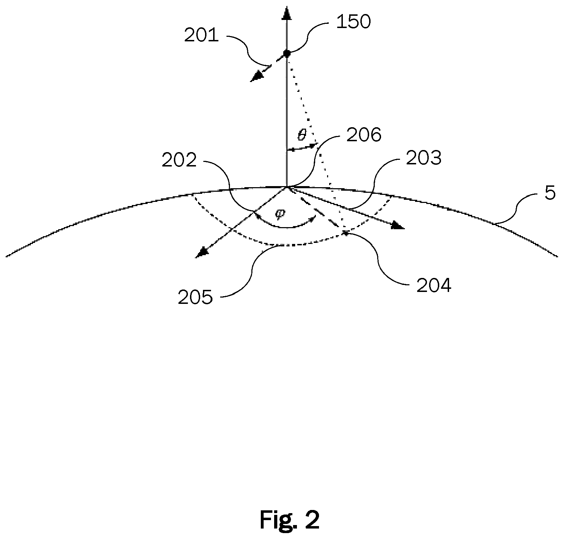

**Fig. 2** schematically illustrates an example of possible nomenclature and conventions for use in describing the radar observation geometry. The radar altimeter 150 (e.g., aboard a satellite) has a velocity vector $\vec{v}$, 201. On ground, the velocity vector $\vec{v}$ defines an along-track (AT) direction 202 (e.g., a ground track) as well as an across-track (XT) direction 203. A point target 204 of the radar altimeter 150 on the sea surface 5 is defined by a range t or r, an elevation angle $\theta$, and an azimuth angle $\varphi$. Further, any point targets with the same ground distance from a nadir point 206 of the radar altimeter 150 define an iso delay (or iso range) curve 205.

By mapping the angular coordinate positions of the scattering elements (e.g., sea scatterers) on the sea surface $(\theta(t), \varphi(t))$ to the delay $t$, the impulse response function w(t) of the sea surface can be expressed as

$$w(\theta(t), \varphi(t)) = \frac{\lambda^2}{(4\pi)^3} \iint\limits_{\theta,\varphi} \frac{P_{Tx}(\theta,\varphi)G_{Tx}(\theta,\varphi)G_{Rx}(\theta,\varphi)}{R^4(\theta,\varphi)} \sigma_0(\theta,\varphi)d\Omega, \qquad (2)$$

where $d\Omega = \sin(\theta)d\theta d\varphi$ is the elementary solid angle subtended in the generic direction $(\theta, \varphi)$.

It can be demonstrated that the time of the shortest path (i.e. nadir return) corresponds to the half-power point 143 on the waveform leading edge 142. The time-space function w(t) may have a typical shape featuring an ideally infinite sharp edge corresponding to the time at which an infinitely narrow pulse impinges on the ocean surface.

As mentioned above, the function $w(t)$ can be easily interpreted as a time profile of the backscattered power that would be received by employing a pulse of infinite bandwidth (i.e., infinitely narrow Dirac-impulse response function).

Since the time of the shortest path corresponds to the half-power point (altimetry point) 143 located on the leading edge 142 of the altimetry waveform 140, the precision on estimating the time of arrival (return time) is directly proportional to the normalized slope of the waveform's leading edge 142. The shorter the radar pulse, the higher the slope of the leading edge, and thus, the higher the altimetry precision. Therefore, the pulse bandwidth is one of the main factor determining the altimetry precision (possibly in addition to other factors such as the signal-to-noise ratio (SNR)).

For conventional nadir radar altimeters, the Tx and Rx antennas typically share the same aperture (thus having coinciding Tx and Rx antenna patterns), and both point towards nadir (i.e., the down-looking direction). In such cases, the Tx and Rx antenna patterns may be chosen to have a ground 3 dB footprint sufficiently larger than the size of the pulse limited footprint. In this configuration, the shape of the waveform on the leading edge is effectively independent on the shape of the antenna patterns as well as the altimetry point (the half power point). This may be seen as an advantage of such configuration, since any pointing error would not directly affect the retrieval of the altimetry point on the waveform. This configuration is defined as "pulse limited altimeter" since the shape of the altimetry waveform is defined mainly by the radar pulse and not by the antenna patterns.

Off-nadir altimetry is based on the fact that either one of the Tx and Rx antennas could be pointed off-nadir (e.g., across-track), with the objective of performing altimetry for sea surface points located outside the nadir region, i.e., off-nadir. Altimetry on multiple points on the sea surface can then be retrieved by employing multiple beams pointing at different regions across-track of the sea surface, meaning that for each of the across-track beam an altimetry waveform is associated and processed for estimating the time of echo return for that beam.

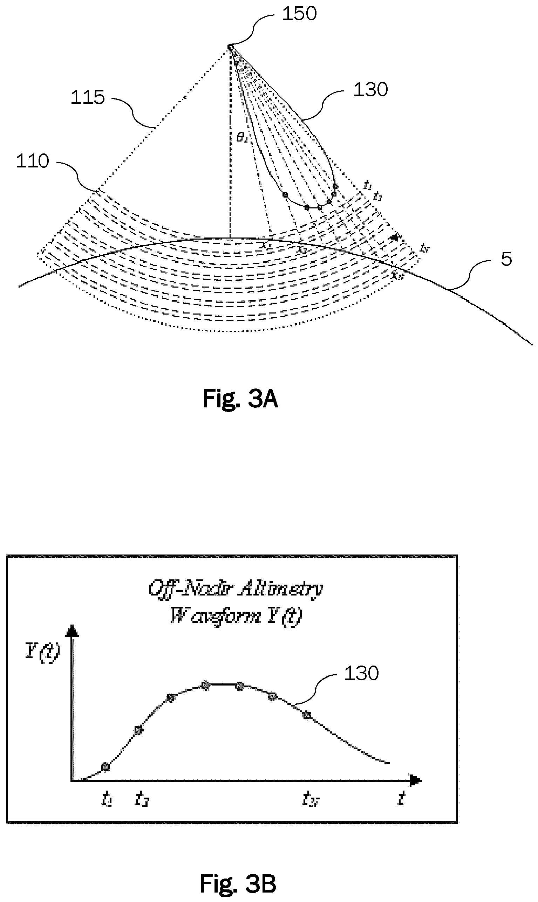

However, such implementations would lead to a "beam limited" altimeter, as opposed to the nadir "pulse limited" altimeter described above. In such a case, the altimetry waveform shape depends strongly on the shape of the antenna beams and on the pointing direction. Indeed, the leading edge of the time-space function for an off-nadir altimeter $w(t)$ depends on the antenna pattern shape, which is not the case for a pulse limited altimeter, where the leading edge shape depends only on the impulse response function $g(t)$. The formation of the off-nadir altimetry waveform and its dependence on the shape of the Rx antenna pattern is schematically illustrated in **Fig. 3A** and **Fig. 3B.**

In **Fig. 3A,** the radar altimetry instrument 150 emits a radar pulse 110 in a transmit beam (Tx beam) 115 and receives an echo of the radar pulse 110, after reflection of the sea surface 5, in a receive beam (Rx beam) 120. The radar pulse 110 is assumed to comprise a spherical pulse front travelling towards the sea surface 5 at the speed of light $c$. For visualization purposes, different instances of the radar pulse 110 at different time instants (timings) $t_1$ to $t_N$ are shown. Locations $x_1$ to $x_N$ within a footprint of the Rx beam 120 on ground have associated elevation angles $\theta_1$ to $\theta_N$, as well as associated respective timings $t_1$ to $t_N$ at which power of the radar pulse 110 is reflected from these locations and is subsequently received as parts of the echo in the second beam 120. Respective powers received for these timings $t_1$ to $t_N$ are also plotted in graph 130 of **Fig. 3b,** which illustrates the off-nadir altimetry waveform Y(t), 130.

As can be seen from **Fig. 3A** and **Fig. 3B,** the received power as the pulse front progresses on the sea surface is primarily dependent on the Rx antenna gain in the direction of the radar pulse on-ground. This again, from an analytical point of view, is represented as the convolution between the radar signal impulse response function $g(t)$ and the sea-surface impulse function $w(t)$, as occurring in the case of a conventional nadir altimeter. In the off-nadir case, however, the Rx antenna pattern has a primary role in shaping the function $w(t)$, possibly in addition to other effects such as variation of free space losses and $\sigma_0$ (sigma0), for example, that are present also in the case of nadir altimetry.

In the case of an off-nadir altimeter the normalized slope of the leading edge is strongly reduced when compared to the pulse limited altimeter, resulting in a severe loss of altimetry precision. As mentioned above, this is due to the fact that the antenna pattern is shaping the $w(t)$ function. In order to increase the slope of the leading edge, very narrow Tx/Rx antenna patterns would need to be employed, which, in turn, would require the use of very large antennas. For typical center frequencies employed in state-of-the-art radar altimeters (e.g., C, Ku, or Ka-band), Tx/Rx antennas of the size of several tens of meters would need to be employed in the off-nadir altimeter case in order to achieve leading edge slopes comparable to the one of nadir altimeters. This clearly is not desirable, if not altogether unfeasible.

For the above and other reasons, off-nadir altimeters have not been employed for performing wide-swath ocean altimetry. The aforementioned limitations however can be overcome by the methods and apparatus proposed by the present disclosure.

Broadly speaking, the present disclosure describes a novel radar altimeter concept that is able to measure sea surface height over a very large swath with a single satellite platform and only one receive multibeam antenna. The proposed solution allows retaining very good altimetry precision and spatial resolution. At the same time, the proposed solution alleviates drawbacks of conventional concepts.

The proposed satellite off-nadir altimetry method and apparatus (e.g., a method and apparatus for performing satellite-based radar altimetry) aim at obtaining off-nadir altimetry waveforms with a leading edge slope comparable to the one achieved with nadir altimeters, without the penalty of having to employ large antennas. The satellite may orbit Earth in Low Earth Orbit (LEO), for example, with a height between 700km to 800km. The proposed method and apparatus would allow to achieve the required altimetry performance responding to the scientific needs of mesoscale altimetry with a compact satellite system. To the inventor's best knowledge, there is no state-of-the-art concept that can achieve this object.

As described above, the main limitation of off-nadir altimeters is due to the strong dependency of the $w(t)$ function on the shape of the Rx antenna beam. Realistic antenna sizes limit the antenna beamwidth, leading to rather poor leading edge waveform slope when compared to classical nadir altimeters.

In order to obtain a sharp off-nadir altimetry waveform, the proposed technique is based on forming a receive (Rx) beam that is scanned in a direction opposite to the travelling direction of the radar pulse on ground, i.e., towards nadir. Scanning the beam may also be referred to as performing a sweep with the beam.

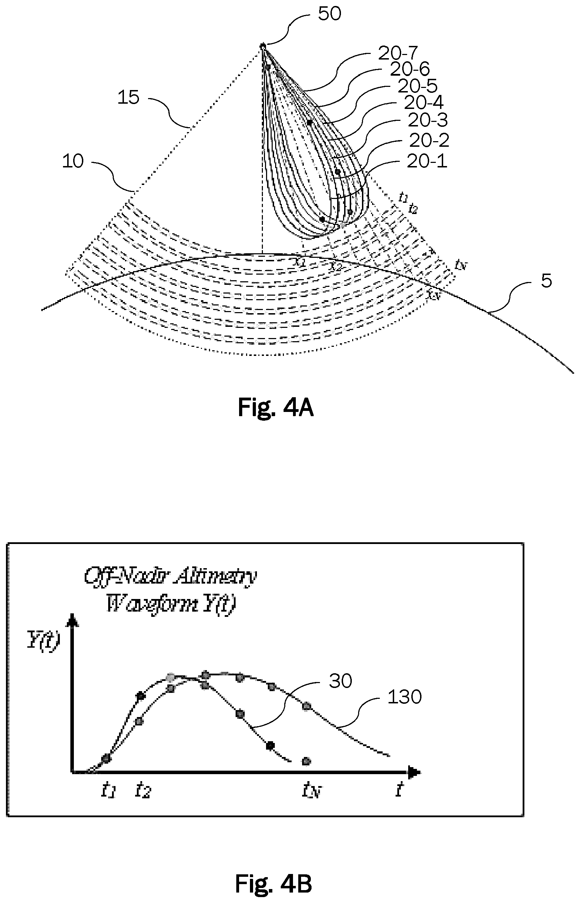

An example embodiment of the present disclosure is depicted in **Fig. 4A** and **Fig. 4B**. Here, the radar altimetry instrument 50 emits a radar pulse 10 in a first beam 15, which is a transmit beam (Tx beam), and receives an echo of the radar pulse 10, after reflection of the sea surface 5, in a second beam 20, which is a receive beam (Rx beam). The radar pulse may be emitted as one of a series (or sequence) of radar pulses, such as periodically emitted radar pulses, for example. The radar pulse(s) may be emitted by a first antenna (e.g., transmission antenna, Tx antenna). The second beam 20 may be a single second beam, or it may be one among a plurality of second beams. The second beam(s) may be generated by a single second antenna (e.g., reception antenna, Rx antenna). The second antenna may be an array antenna comprising a plurality of sub-apertures, for example. The sub-apertures of the array antenna may be arranged in the across-track direction. For this configuration of the second antenna, the second beam 20 can be generated by means of digital beamforming, using the array antenna. The digital beamforming comprises applying time-dependent phase shifts to the echo signals received by respective sub-apertures (in the process of synthesizing the amplitude waveform from the individual echo signals), to thereby cause the scanning motion of the second beam.

Preferably, the first beam is a wide beam. In particular, the width of the first beam 15 is preferably chosen such that echoes of the radar pulses 10 can be received over the full swath that is of interest. For instance, the width of the first beam 15 (in the XT direction) may correspond (or substantially correspond) to the scanning range of the second beam(s) 20. In some embodiments, the width of the first beam 15 may fully cover the scanning range of the second beam(s) 20.

Moreover, the first beam 15 may be pointed in the nadir direction. However, also other implementations are feasible, as long as radar pulses 10 are emitted towards the sea surface 5 in such manner that their echo can be received in the second beam(s) 20.

If a plurality of second beams are emitted, the plurality of second beams may in some embodiments include a beam that is static (fixed) and pointed in the nadir direction. The echo received by this beam (i.e., the corresponding signal or amplitude waveform) may be used for reference or calibration purposes.

The radar pulse 10 is assumed to comprise a spherical pulse front travelling towards the sea surface 5 at the speed of light $c$. Locations $x_1$ to $x_N$ within a footprint of the second beam 20 on ground have associated elevation angles $\theta_1$ to $\theta_N$, as well as associated respective timings $t_1$ to $t_N$ at which power reflected from these locations is received as part of the echo in the second beam 20. The received echo is used to obtain (e.g., derive) a signal indicative of an amplitude of the echo over time, for example as an off-nadir altimetry waveform $Y(t)$, 30, which is shown in **Fig. 4B**. In general, the amplitude of the echo over time may be referred to as an amplitude waveform. Respective powers received at timings $t_1$ to $t_N$ are also plotted in the graph of $Y(t)$, 30, which is compared to the conventional waveform 130.

The obtained signal (e.g., waveform $Y(t)$) can then be used for determining a return time of the echo. The return time may correspond to the half-power point (altimetry point) of the amplitude waveform $Y(t)$. For example, the altimetry point may correspond to a peak of the amplitude waveform $Y(t)$. The distance between the altimetry instrument 50 and the sea surface 5 can then be calculated from the difference in time between the timing of emission of the radar pulse 10 and the determined return time. To determine this time difference (i.e., the travel time of the radar pulse from emission in the first beam 15, via reflection at the sea surface, to detection in the second beam 15), the proposed method may include maintaining an internal clock as reference for timings of radar pulse emission and return times.

Importantly, as noted above, the second beam 20 is scanned with a scanning motion in a scanning direction orthogonal to a ground track of the satellite (i.e., along the XT direction), and the echo of the radar pulse 10 is received during the scanning motion of the second beam 20. In particular, the second beam 20 is scanned in the direction orthogonal to the ground track of the satellite when receiving the echo of the radar pulse, from a maximum angular excursion from nadir (e.g., from a maximum elevation angle), towards nadir. When the radar pulse 10 impinges on the sea surface 5, a locus at which the (spherical) radar pulse 10 currently intersects with the sea surface 5 is described by a point, circle, or annular area with continuously growing radius. In the XT direction, the radar pulse 10 thus propagates on ground from nadir towards larger angular excursion from nadir. The radar pulse 10 may thus be said to have an (apparent) pulse speed on ground (i.e., along the sea surface 5). The scanning motion of the second beam 20 is opposite to the direction of propagation of a locus at which the (spherical) radar pulse 10 impinges on the sea surface 5 (i.e., the intersection of the radar pulse 10 with the sea surface 5). In other words, the second beam 20 is scanned towards the radar pulse 10 as it travels along the sea surface. It is understood that the echo of the radar pulse is received while the second beam 20 is scanned towards nadir.

In general, the second beam may be scanning with a scan speed (e.g., elevation angle speed or change rate of elevation angle) that is higher than the apparent pulse speed on-ground (e.g., apparent pulse speed on-ground vs elevation angle). By fast-scanning the Rx beam "through" or "against" the radar pulse, the altimetry waveform becomes sharper in time (i.e., is time-compressed) and it presents an increase leading edge slope, as it will be explained in the following.

For visualization purposes, the scanning of the second beam 20 (Rx scanning beam) is illustrated in **Fig. 4A** by showing the second beam 20 at several time instants (timings). Accordingly, different instances 20-1 to 20-7 of the second beam 20 at different time instants $t_1$ to $t_7$ are shown, with instance 20-7 corresponding to an earliest time $t_7$, and instance 20-1 corresponding to a latest time $t_1$, to illustrate the scanning of the second beam 20 towards nadir. The corresponding dots shown on each instance of the second beam 20 identify the power received at those time instants by the second beam (i.e., the scanning beam), as the radar pulse 10 travels along the sea surface 5. As can be seen, the angular region over which the dots spread is significantly smaller than the original beamwidth (e.g., 3 dB beamwidth) of the Rx scanning beam 20. As such, the dots identify a "synthetized" beam which has the same shape as the original Rx beam but a much smaller beamwidth (e.g., 3 dB beamwidth). The beamwidth of the synthetized beam is defined by selecting the appropriate Rx beam scanning speed.

The effect of waveform sharpening due to beam scanning by fast-scanning the Rx beam "against" the pulse towards nadir compared to off-nadir radar altimetry with a fixed Rx beam is also clearly visible when comparing waveforms 30 and 130 in **Fig. 4B**.

In other words, the scanning of the Rx antenna beam towards nadir is carried out in order to obtain a $w_{bs}(t)$ function (where the "bs" subscript stands for "beam scanning") with a much sharper leading edge than for the case of a static (i.e., fixed) a Rx beam. This would allow to obtain a sharp leading edge also on the final altimetry waveform (which is the convolution of the radar impulse $g(t)$ with the new function $w_{bs}(t)$).

Due to the Rx beam scanning, from an analytical point of view, the $w(t)$ function of equation (2) now has an additional time delay dependence on the Rx antenna pattern, which is in this case also time-varying.

It can be easily derived that the beam scanning altimetry waveform $Y_{bs}(t)$ is related to the fixed off-nadir altimetry waveform $Y(t)$ as

$$Y_{bs}(t) = w_{bs}(t) * g(t) = w(\alpha t) * g(\alpha t) = Y(\alpha t), \qquad (3)$$

where

$$\alpha = \frac{v_{sb}}{v_p} + 1, \qquad (4)$$

and $v_{sb}$ is the Rx beam scanning speed on-ground and $v_p$ is the radar pulse speed on-ground.

Equation (3) shows that, in ideal conditions, the altimetry waveform of the beam scanning method is a "time-compressed" version of the fixed beam altimetry waveform. The level of time-compression is given by the ratio of beam speed and pulse speed, as presented in equation (4).

The angular speed of the Rx scanning beam is a design parameter, which can be properly chosen in order to obtain the desired properties of the $w_{bs}(t)$, e.g., the leading edge slope.

By virtue of the scanning, the ocean region illuminated by an off-nadir beam is also reduced proportionally to the scanning speed, since the synthetized beam has a reduced beamwidth (e.g., 3 dB beamwidth).

Preferably, the Rx beam scanning (angular) speed is chosen to be much higher than the angular speed (seen by the Rx satellite) of the radar pulse travelling on the ocean's surface.

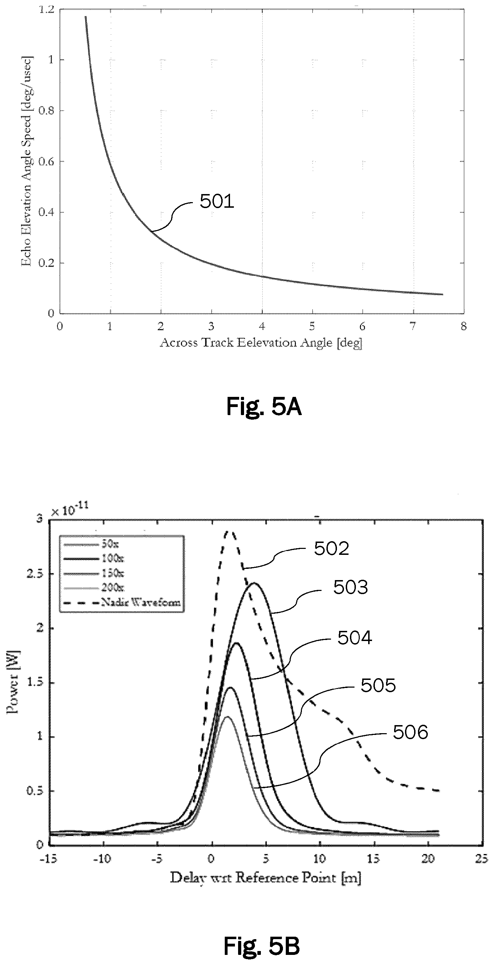

Graph 501 in **Fig. 5A** shows the elevation angle rate of a radar pulse as it travels on the ocean surface in the across-track direction as a function of elevation angle (across track angle, angle of excursion from nadir). For this example, the orbital height of the altimetry instrument (that serves as reference or origin for the elevation angle) is chosen to be a typical satellite orbital height of 750km. As can be seen, the elevation angle rate of the radar pulse is high for low elevation angles and drops off for larger elevation angles. This drop-off reflects the geometry of the spherical radar pulse front propagating towards the sea surface and thus intersecting with the (spherical) sea surface in a time-variant (i.e., radially extending) locus.

**Fig. 5B** illustrates examples of altimetry waveforms 503 to 506 obtained with the proposed scanning altimeter (for an across-track pointing of 2 deg) for different scanning speeds of 50 times, 100 times, 150 times, and 200 times the pulse speed, respectively, assuming the radar parameters listed in **Table I** below. The nadir altimetry waveform 502 is provided as reference. As can be seen, the obtained waveforms 503 to 506 of the proposed radar altimeter have comparable leading edge slope as the nadir altimetry waveform 502.

For the above example of orbital height and assuming typical radar parameters (e.g., radar parameters given by or in line with **Table I**), the Rx beam scanning speed should range from about 50 to 500 times of the radar pulse speed. This would allow obtaining altimetry waveforms with leading edge slope comparable to the one obtainable with nadir pointing altimetry. In general, it may be preferable if the scan speed of the scanning motion of the Rx beam (second beam) depends on the propagation speed, along the ocean surface (i.e., on ground) of the radar pulse (i.e., of the locus at which the radar pulse impinges on the ocean surface). Since the propagation speed of the radar pulse on ground depends on the angle of excursion form nadir (elevation angle), this translates into the requirement that the scan speed depends on an angle of excursion of the second beam from nadir. In particular, the scan speed may be higher for a small angle of excursion from nadir and lower for a large angle of excursion from nadir. Specifically, in some implementations, the scan speed may be a predetermined multiple of the propagation speed, along the ocean surface, of the radar pulse (i.e., of the locus at which the radar pulse impinges on the ocean surface). For example, the predetermined multiple for the angle-dependent scan speed may be in the range from 50 to 500 as given above, or in some embodiments in the range from 100 to 200. In other embodiments, the scan speed may be at least a predetermined multiple of the propagation speed, along the ocean surface, of the radar pulse.

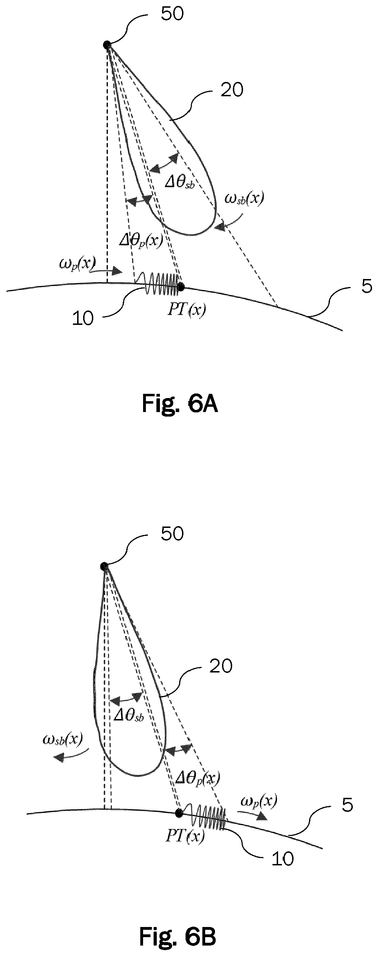

It is intuitive to think that the scanning speed of the Rx beam cannot be chosen indefinitely high. In fact there is an upper bound after which not all the energy scattered by a point target is received by the Rx beam itself. Above this threshold, a loss of received energy would occur, leading to loss of signal-to-noise ratio and spatial resolution. To derive such upper bound, reference will now be made to **Fig. 6A** and **Fig. 6B,** which show a relation between the Rx beam scanning speed and the beamwidth for a given point target. In particular, **Fig. 6A** depicts the time instant at which both the leading edge of the (uncompressed) pulse 10 and the leading edge of the Rx beam 20 impinge on a generic point target (PT) located at an across-track position $x$ on the sea surface 5, and **Fig. 6B** depicts the time instant at which both the trailing edge of the pulse 10 and the trailing edge of the Rx beam 20 impinge on the generic point target at across-track position $x$ on the sea surface 5. In other words, **Fig. 6A** depicts the time instant at which both the pulse 10 and the Rx beam 20 "enter" the point target and **Fig. 6B** depicts the time instant at which both the pulse 10 and the Rx beam 20 "leave" the point target. The uncompressed pulse 10 is assumed to be a chirp pulse of duration $\tau_p$, extending over an elevation angle width of $\Delta\theta_p(x)$, travelling through the point target PT with an angular speed $\omega_p(x)$. Without loss of generality, a chirp radar signal (e.g., linearly frequency modulated signal) is considered here, since it is almost exclusively employed in conventional radar altimeters. However, also other radar waveform types can be considered without changing the conclusions presented here. In general, it is understood that methods and apparatus described by the present disclosure shall not be limited to using chirp pulses.

It is further assumed that the Rx scanning beam 20 has a beamwidth of $\Delta\theta_{sb}$ and a scanning speed of $\omega_{sb}(x)$. The dependence on the across track position $x$ will be explicitly presented where applicable.

In order to ensure that all the scattered energy from the point target PT is received by the scanning beam 20, the scanning beam 20 has to observe the point target for a time period equal or greater than the time it takes for the uncompressed radar pulse 10 to travel through it,

$$\frac{\Delta\theta_{sb}}{\omega_{sb}(x)} \geq \frac{\Delta\theta_p(x)}{\omega_p(x)} \tag{5}$$

As explicitly noted in equation (5), this condition is a function of the across-track position $x$, due to the across-track dependency of the radar pulse angular speed.

In other words, equation (5) states that if the beam scanning speed is increased, also the beamwidth shall be increased in order to receive the full scattered energy by a point target. This may not be desirable in general, since a larger beamwidth implies lower directivity, and thus lower signal-to-noise-ratio. This may thus result in a limitation on the maximum employable scanning speed, resulting in a trade-off between altimetry precision and signal-to-noise ratio. The constraint imposed by this condition becomes stronger as the length (duration) of the radar pulse increases, and is particularly relevant when chirp radar pulses are employed, since they have typically comparatively long durations in order to achieve the desired compression gain and signal-to-noise ratio.

The constraint imposed by the aforementioned condition can be relaxed by employing frequency dispersive processing, which will be described next.

Frequency dispersive processing can be employed when a frequency-modulated radar pulse (e.g., linearly frequency-modulated radar pulse) is used, i.e., a sweep signal. Such frequency-modulated radar pulse (e.g., linearly frequency-modulated radar pulse) may be referred to as a chirp pulse. The chirp pulse may be assumed to have a predetermined frequency profile (or equivalently, wavelength profile). The chirp may be an up-chirp or a down-chirp, for example, and may have a frequency profile for which the pulse's signal frequency continuously increases or continuously decreases. Chirp pulses are used in most state-of-the-art radar altimeters.

Specifically, the time-frequency dependency (e.g., linear dependency) of chirp radar pulses can be exploited in order to avoid the limitation on the beam scanning speed as given by equation (5). Due to the time-frequency dependency (e.g., linear time-frequency dependency) of a chirp, a given point target on the sea surface instantaneously reflects only one frequency of the chirp pulse passing through it. Therefore, it can be envisaged to employ a frequency dispersive Rx beam (i.e., a frequency dependent pointing beam), and scan it such that the instantaneous frequency of the beam pointed at the point target corresponds to the frequency of the radar pulse reflected by the point target itself. This would allow employing high gain Rx narrow beams without the limitation of reducing the scan speed as required by equation (5), and without degradation in signal-to-noise ratio.

A frequency dispersive beam of total beamwidth $\Delta\theta_{fd\text{-}sb}$ encompassing a linear frequency progression vs elevation angle can be obtained by either analog or digital means. For instance, frequency dependent pointing can be implemented by means of specific digital beamforming processing. Assuming that the second beam (Rx beam) is generated by means of digital beamforming, using an array antenna with a plurality of sub-apertures, frequency-dependent pointing of the second beam can be achieved by applying frequency dependent phase shifts to the echo signals received by respective sub-apertures. These frequency-dependent phase shifts would be applied in addition to the time-dependent phase shifts to the echo signals that cause the scanning motion of the second beam. Then, when the (frequency-dependent) phases shifted echo signals are summed in the process of generating the signal of interest (e.g., the amplitude waveform), different frequency components of the echo will add up constructively in the obtained signal for different pointing directions within the second beam. Having knowledge of the frequency profile of the chirp pulse, the frequency-dependent phase shifts for respective sub-apertures can be chosen such that frequencies of the frequency components of the echo for which there is constructive interference vary for pointing directions from a leading edge of the second beam in the scanning direction to a trailing edge of the second beam in the scanning direction in accordance with the frequency profile of the chirp pulse. In other words, the pointing frequency profile of the second beam can be aligned with the frequency profile of the radar pulse. Notably, the frequency-dependent phase shifts may be fixed / static (i.e., constant over time), so that a fixed frequency-dependent pointing pattern within the second beam exists, which overlays the scanning motion of the second beam. Further details on generating a frequency dispersive beam will be described below.

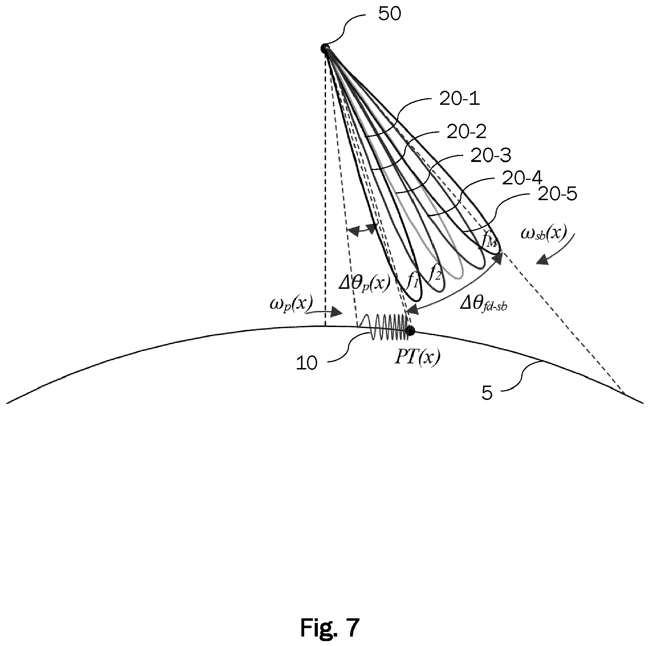

**Fig. 7** illustrates a discrete set of frequency-dependent pointed beams 20-1 to 20-5 that are specific to different frequencies. Notably, in this figure the different illustrated beams do not relate to different instances of the same beam Rx at different time instants, but indicate different frequency sensitivities within a given Rx beam. Moreover, while a discrete set of beams is shown, it is understood that the frequency profile of the Rx beam's pointing pattern may be (substantially) continuous. The directivity / gain of a single discrete set of beams is related to the antenna size, while the total dispersive beam can be made much wider.

In the case at hand, the condition to acquire the full scattered energy will become

$$\frac{\Delta\theta_{fd-sb}}{\omega_{sb}(x)} \geq \frac{\Delta\theta_p(x)}{\omega_p(x)} \tag{6}$$

By contrast to equation (5), in the case of frequency dispersive processing now the condition $\Delta\theta_{fd\text{-}sb} \gg \Delta\theta_{sb}$ is valid, thus allowing to still satisfy the condition of equation (6) at much higher scanning speed $\omega_{sb}(x)$ without loss of energy scattered by a generic point target on the sea surface 5.

With the methods and apparatus according to the present disclosure, a wide swath across-track could be obtained simply by employing a set of contiguous beams in elevation. The set of contiguous beams may be scanned according to the pre-defined timing of scanning speed with respect to elevation angle, according to the observation geometry. Each beam, when scanning through the radar pulse on the ground, generates a separate altimetry waveform, from which sea surface height can be estimated (e.g., calculated). In such case, the total number of beams to be generated clearly depends on the total targeted across-track swath (and thus on the associated elevation angle range), the individual beamwidths, the chosen beam overlap between adjacent beams, and the scanning speed.

However, according to embodiments of the disclosure, the total number of Rx beams across-track does not need to be generated simultaneously, since only a subset of beams is simultaneously passing through the radar pulse on-ground. Thus, on the basis of a-priori knowledge of the observation geometry, and of the time of transmission of the radar pulse, the corresponding scanning beam for a given across-track position is generated, and kept active for the time window on which the echo is expected to be received (also defined as echo time window).

That is, in some embodiments, echoes of the emitted radar pulse are received, after reflection off the ocean surface, in a plurality of second beams, and respective signals indicative of amplitudes of the echoes over time (e.g., amplitude waveforms, or altimetry waveforms) are obtained. These signals can be used to determine respective return times of the echoes. The plurality of second beams may be contiguous in elevation, i.e., their footprints on ground may be contiguous in the XT direction and/or may have a given beam overlap between adjacent beams. For example the plurality of second beams may have a given fixed offset in elevation angle between one another. Also here, it is understood that the second beams are scanned with scanning motions in a direction orthogonal to a ground track of the satellite (e.g., towards nadir), and the echoes of the radar pulse are received during the scanning motions of the second beams. Then, in such configuration, only those second beams would be active (e.g., in the sense that a read-out of phase combinations corresponding to their echo signal(s) is performed) that point towards a location on the sea surface that is expected to be currently illuminated by the radar pulse.

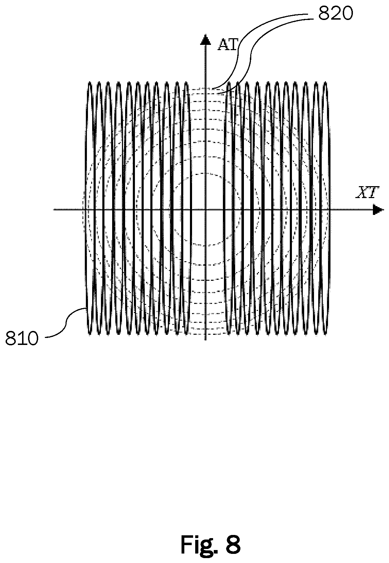

**Fig. 8** shows a corresponding example of synthetic antenna footprints on the sea surface obtained with the proposed fast-scanning altimeter. As can be seen, there are a plurality of synthetic antenna footprints 810 that may each extend in the XT direction over a range of few hundred meters (e.g., 100 to 200 m), for example. Also shown in the figure are iso-range contours 820.

Uncertainties in the knowledge of satellite orbital height, and more importantly, of a-priori sea surface height, may be taken into account by considering an enlarged echo time receive window. This would imply to activate few contiguous beams, in order to guarantee reception of the echo signal within the echo receive time window. Typical a-priori knowledge uncertainty of the Geoid range is on the order of few hundred meters, which has a negligible impact for typical satellite observation geometries.

Next, an impact of pointing accuracy and stability on methods and apparatus according to embodiments of the disclosure will be described.

For any off-nadir altimeter, the pointing knowledge accuracy may play an important role for the achievable sea surface height accuracy across the swath. For the proposed technique, the sea surface height accuracy depends on the pointing accuracy knowledge of the Rx antenna beams. From simple geometrical considerations, an error in the antenna pointing knowledge would appear as an apparent range difference (or difference in echo time reception), which would in turn correspond to an apparent difference in sea surface height.

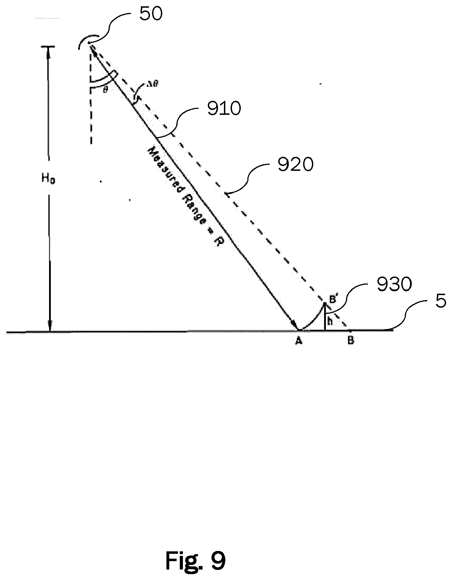

This is schematically illustrated in **Fig. 9.** If a range R, 910 is measured for point target A, an error $\Delta\theta$ in the knowledge of the pointing direction would result in the interpretation that a return 920 from point target B' is at height h, 930. This may impose a rather stringent requirement for the knowledge of the pointing error. For example, in order to have a height error of 1 cm at 100 km across-track XT position, a knowledge accuracy of 0.1 $\mu$rad would be required.

Nevertheless, a degraded pointing knowledge accuracy could be accepted if external means for calibrating the pointing error are employed. One approach would be to use set observations acquired by means of descending and ascending orbits (i.e. orbit cross-overs). These can be compared in order to identify apparent observed sea surface slopes due to pointing errors. This can work under the assumption that the instrument pointing as well as the sea surface topography are stable between the compared observations. This implies that also pointing stability is an important parameter to control.

In conventional radar nadir altimetry or Delay / Doppler altimetry, the delay of the altimetry point is typically estimated by carrying out a "retracking" of the altimetry waveform. Waveform "retracking" aims at obtaining a fine estimation of the geophysical parameters of interest from the measured waveform. These geophysical parameters may include, for example, the sea surface height, wind speed, and others. Waveform retracking is generally carried out by finding the geophysical parameters which provide the best fit between a model and the actual observation. Typical approaches are the Least-Squares (LS) and Maximum Likelihood (ML) estimators, with and without applied weighting.

For the proposed instrument, similar waveform retracking methods can be seamlessly applied to the different off-nadir across-track waveforms. This is considered a big advantage of the proposed altimetry system, compared to wide-swath techniques such as radar interferometry. However, for off-nadir waveforms, it is very important to have an accurate knowledge of the antenna pattern shape of the Rx beams, as described above, since it may affect the shape of the received waveform, and therefore the accuracy at which the retracking will work.

As noted above, waveform retracking relies on the a-priori knowledge of the shape of the altimetry waveform, in order to allow for an accurate estimation of the sea surface height. In particular, a very accurate knowledge of the shape of the antenna pattern may be necessary, since it defines the shape of the leading edge of the altimetry waveform that is eventually used for estimating the sea surface height. Here, even small errors of amplitude / phase on the different channels of the receiving sub-apertures of the array antenna might affect the knowledge of the antenna pattern shape and, in turn, the accuracy of the sea surface height estimation.

For this reason, in order to reduce the impact of the shape of the antenna pattern, the present disclosure proposes to apply a technique based on amplitude monopulse processing. This technique involves differencing of two consecutive altimetry waveforms (i.e., altimetry waveforms obtained by two consecutive (or contiguous) Rx beams among a plurality of Rx beams that are scanned across the swath in sequence). The "difference" waveform is zero at the point of crossing between the two contiguous antenna patterns. This zero can be used as the reference altimetry point, which is independent on the shape of the antenna patterns. This technique allows also to reduce the effect of speckle since speckle is cancelled by the differencing technique.

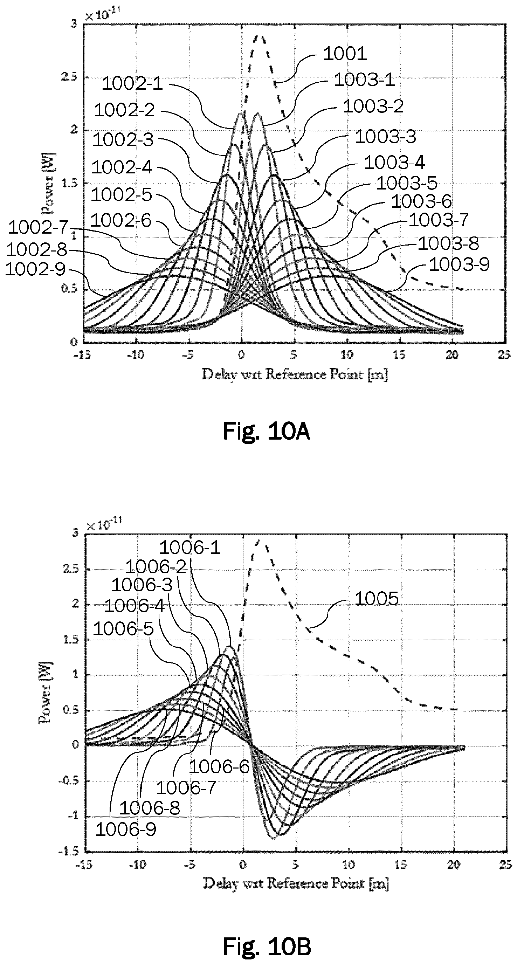

**Fig. 10A** show a set 1002, 1003 of two waveforms consecutively acquired, i.e. waveforms acquired by two contiguous scanning Rx beams, for different elevation angles (or different across-track positions). Higher peak values of the altimetry waveforms correspond to smaller elevation angles. Also shown is the nadir waveform 1001 as a reference. The example refers to a reference case of a Tx power of 500 W, Rx beam scanning speed of 100×pulse speed and a chirp bandwidth of 100 MHz. The altimetry waveforms 1003-1 to 1003-9 on the right side of the plot of **Fig. 10A** have been acquired for a given Rx scanning beam, whereas the altimetry waveforms 1002-1 to 1002-9 on the left side have been acquired by the previous scanning Rx beam. For instance, waveform 1002-1 has been acquired by a first one among the two contiguous (or consecutive) scanning Rx beams, whereas waveform 1003-1 has been acquired by the second one among the two contiguous Rx scanning beams, with the second Rx scanning beam following after the first Rx scanning beam (in the scanning direction, in the sequence of scanned Rx beams), and so forth. The delay of the altimetry waveforms has been corrected with the a-priori known relative delay curvature for aligning the altimetry waveforms, taking as reference the point of cross-over between the patterns of two consecutive Rx scanning beams. Thus, as expected, all the contiguous waveforms cross at exactly the same point, which is the delay of the echoes received at the Rx beam pattern cross-over points.

The cross-over points can be better observed by subtracting (i.e. differencing) the consecutive waveforms, producing so-called monopulse waveforms. These waveforms have the property that the altimetry point (e.g., the cross-over point between two consecutive Rx beams) occurs at the zero crossing point. The zero crossing point is independent of the shape of the waveforms. This makes the retrieval algorithms of the altimetry point significantly less sensitive to the uncertainties in the knowledge of the Rx beams antenna patterns. The resulting monopulse waveforms 1006-1 to 1006-9 obtained by differencing the consecutive altimetry waveforms are shown in **Fig. 10B,** in which again the nadir waveform 1005 is shown as a reference.

Notably, the spacing (or equivalently, time offset) between consecutive (or contiguous) Rx antenna beams is a design parameter and can be defined in order to optimize the slope and SNR at the zero-crossing point of the monopulse waveforms. The examples of **Fig. 10A** and **Fig. 10B** assume a spacing between the beams of one beamwidth, i.e., with cross-over level of 3dB.

It is also noted that the proposed radar altimetry technique as well as associated processing techniques are fully compatible with along-track synthetic aperture processing. This is also known as Delay / Doppler altimetry or synthetic aperture radar altimetry, which can be either "fully focussed (FF)" or "unfocussed".

Delay/Doppler processing corresponds to a "beam limited" altimeter. The obtained altimetry waveforms correspond to the individual synthetic Doppler beams obtained by coherent processing along-track of a consecutive set of radar pulses.

A combination of along-track Delay / Doppler processing of the across-track Rx beam scanning functionality of the proposed altimeter would allow to obtain an instrument footprint that is the intersection of the along-track Doppler contiguous footprints generated by the Delay / Doppler processing and the across-track Rx synthetic contiguous beams footprints generated by the Rx beam fast scanning technique. This would generate a high resolution bi-dimensional mapping of the sea surface height at unprecedented accuracy. This configuration would also be very advantageous for coastal altimetry, which has been a subject of interest for several years.

Next, examples of the proposed instrument concept and its architecture will be described.

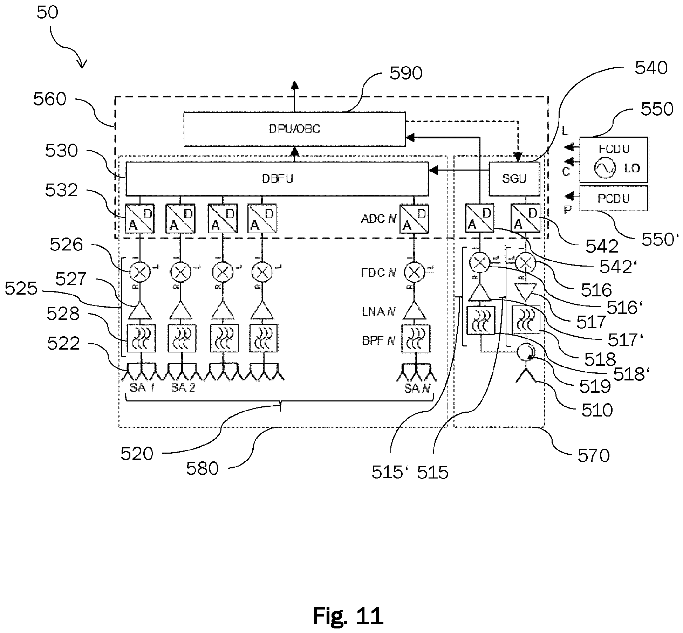

One such example is schematically illustrated in **Fig. 11,** which shows a block diagram of an apparatus (instrument) 50 for performing radar altimetry according to embodiments of the disclosure. The instrument 50 may be arranged (e.g., mounted) abord a satellite.

In general, the instrument 50 comprises a first antenna 510 for emitting a radar pulse towards the sea surface (ocean surface) in a first beam, i.e., Tx beam, and a second antenna 520 for receiving an echo of the radar pulse, after reflection off the ocean surface, in a second beam (Rx beam) among one or more second beams. The second antenna 520 in this example is an array antenna comprising a plurality of sub-apertures 522. In some embodiments, the first and second antennas 510, 520 may be distinct antennas. This is understood to also include the case that the first antenna 510 is embedded in, but does not fully correspond to, the second antenna 520. For example, the first antenna 510 may be formed by one or more sub-apertures 522 of the second antenna 520 (i.e., the array antenna). The instrument 50 further comprises a beamforming unit 530 coupled to the second antenna 520 for (coherently) processing echo signals received by respective sub-apertures 522. The beamforming unit 530 may correspond to or comprise a digital beamforming network, for example.

The beamforming unit 530 is adapted to apply time-dependent phase shifts to the echo signals received by respective sub-apertures 522 to thereby cause a scanning motion of the second beam in a scanning direction orthogonal to a ground track of the satellite. It is understood that the echo of the radar pulse is received during the scanning motion of the second beam. The (time-dependent) phase shifts may be added to maximize the obtained signal reflected from a given point target on the sea surface, where that point target defines a pointing direction of the second beam. At each time instant, the pointing direction is defined by the currently applied phase shifts. The time-dependent phase shifts may be frequency-independent.

The beamforming unit 30 may be further adapted to apply frequency-dependent phase shifts to the echo signals received by respective sub-apertures 522 of the second antenna 520, such that different frequency components of the echo of the radar pulse add up constructively in the obtained signal for different pointing directions within the second beam. Therein, the frequency-dependent phase shifts for the sub-apertures 522 may be chosen such that frequencies of the frequency components of the echo for which there is constructive interference vary for pointing directions from a leading edge of the second beam in the scanning direction to a trailing edge of the second beam in the scanning direction in accordance with the frequency profile of the radar pulse (e.g., assuming that it is a chirp pulse with a predetermined frequency profile). The frequency-dependent phase shifts may be static (i.e., fixed) and may not change over time. Thereby, a frequency-dependent pointing pattern of the second beam is overlaid with the scanning motion of the beam as caused by the time-dependent phase shifts.

The beamforming unit 530 is further adapted to sum the phase-shifted echo signals for obtaining a signal indicative of an amplitude of the echo of the radar pulse over time. The obtained signal may allow determination of a return time of the echo of the radar pulse, which in turn may allow calculation of a distance to a location on the sea surface that is covered by the second beam at the determined return time. This determination and/or calculation may be performed within the instrument (or in general, aboard the satellite), or it may be performed on ground, after transmission of the relevant information from the instrument to an appropriate facility on ground.

As noted above, the second antenna may be adapted to receive echoes in a plurality of second beams. In this case, only those second beams may be active at a time (in the sense that appropriate phase shifts for that second beam are applied by the beamforming unit) that point towards a location on the sea surface that is expected to be currently illuminated by the radar pulse.

A more detailed description according to an example will be given next. The proposed instrument 50 comprises a transmit Tx section 570 and a receive Rx section 580. The Tx section 570 comprises a signal generator unit (SGU) 540, a frequency generation and clock distribution unit (FCDU) 550, a power distribution control unit (PDCU) 555, a TX antenna (TXA, first antenna) 510, an analog-to-digital converter (ADC) 542, and a signal chain 515 coupled between the ADC 542 and the TX antenna 510. The signal chain 515 may comprise a frequency downconverter (FDC) 516, a high power amplifier (HPA) 517, and a bandpass filter (BPF) 518.

The Tx antenna 510 may be designed (e.g., in terms of aperture size and aperture illumination distribution) in order to generate a Tx beamwidth able to illuminate the complete wanted across-track swath (e.g., typically 100 to 200 km). The Tx antenna 510 can be implemented by means of an array-fed reflector (AFR) or direct radiating array (DRA). For technological reasons, at higher frequencies (e.g., Ka-band at 35.75 GHz), the reflector solution might be preferable, in order to support centralized distribution with a single HPA and to minimize the Tx path losses from the HPA to the TX Antenna port. The Tx aperture illumination distribution can be chosen to obtain the wanted sidelobe levels as well as to obtain a shaped beam featuring higher gain on off-nadir directions, compensating for the larger free-space losses, lower reflectivity as well as smaller ground range resolution cells.

The Rx section 580 comprises an active Rx antenna (RXA; second antenna) 520 composed of several (e.g., typically tens) receive channels, embedding multiple sub-apertures (SA) 522 in across-track direction (i.e., in elevation), as well as respective ADCs 532 and respective signal chains 525 coupled between the ADCs 532 and the sub-apertures 522. Each signal chain 525 may comprise a BPF 528, a low-noise amplifier (LNA) 527, and an FDC 526. The FDCs 526 are understood to downconvert to intermediate frequency (IF). The ADC sampling frequency may be selected in order to sample the echo of the radar pulse in an alias-free manner. The multiple outputs of the ADCs 532 are then processed by a digital back-end unit (DBEU) 560. The digital back-end unit 560 comprises a digital beamforming unit (DBFU) 530 and a digital processing unit (DPU) 590. The DBFU 530 carries out on-board generation of the Rx scanning beams. The individually beamformed Rx signals are then pulse compressed (matched filtered) and time stamped on-board by the DPU 590 in order to obtain the corresponding altimetry waveforms. The altimetry waveforms may then be sent to ground in some embodiments for further processing (e.g., retracking of the altimetry point). The final estimation of sea surface height with respect to WGS84 may be typically carried out by further processing on-ground.

The Rx antenna 520 can be implemented by means of an array fed reflector with the array distributed in across-track direction, or by means of a Direct Radiating Array, again with array elements distributed in across-track direction. The size of the Rx antenna 520 may be chosen in order to guarantee a sufficient signal-to-noise ratio of the altimetry waveform, as part of a trade-off including any one or all of Tx power, Tx antenna gain, noise figure, sea surface reflectivity and wanted across-track swath (i.e., field-of-view).

The number of Rx channels (i.e., the number of sub-apertures 522) may be generally minimized and may be selected so as to avoid grating lobes within the swath which could create ambiguous echo returns. A typical separation of $2\lambda$ is sufficient to have absence of grating lobes within an across-track swath of $\pm$ 100 km, also taking into account the grating-lobes filtering effect provided by the Tx antenna pattern. The Rx antenna aperture distribution may result from a trade-off between wanted directivity and sidelobe levels. In general, it may be aimed at choosing the minimum sufficient directivity in order to minimize the size of the Rx antenna 520.

The Rx antenna beam scanning can be carried out by applying digital beamforming on receive. The digital beamforming is carried out for example by applying different time-dependent phase-shifts for each of the different Rx sub-apertures 522 and coherently summing the corresponding (phase-shifted) signals, in order to obtain maximum gain in the wanted time-dependent across-track direction. The time-dependent phase-shift profile can be pre-computed a-priori on the basis of the known observation geometry and the time instant of pulse transmission, in order to compensate for the varying speed of the radar pulse across the swath. Without loss of generality, the Rx elevation scanning speed can be chosen to be a multiple of the radar pulse elevation speed (e.g., 50 to 500 times the radar elevation speed). It is understood that the time-dependent phase shift applied here may be frequency-independent.

In addition to the abovementioned time-dependent phase shifts, also frequency-dependent phase shifts can be applied in order to form a frequency dependent pointing, also called "frequency dispersive beam," as described above. The frequency-dependent phase shifts are however constant in time, since the time dependence of the beam scanning is already taken into account by the time-dependent phase shift. Among other techniques, the frequency-dependent phase shifts can be implemented by applying a channel dependent delay of an integer or fractional number of the signal samples. In fact, a constant delay produces a linear phase vs frequency behavior, which is the desired result. Alternatively, the desired result could be obtained by properly phasing the sampling clocks of the ADCs 532 in the different channels.

Signals summation for final beamforming is carried out after the time-dependent and/or frequency-dependent processing on each of the channels.

Multiple Rx beams can be easily generated simultaneously on-board by the DBFU 530, simply replicating the processing described above by adopting the corresponding time-dependent and frequency-dependent amplitude / phase beamforming coefficients. The number of simultaneous beams that can be processed is merely an issue of on-board computational capacity, memory, and data-rate limitations. It is important to highlight that not all the beams for covering the complete swath need to be generated simultaneously, since the beam generation can follow the radar pulse travelling on the ocean surface. This is a big advantage of the proposed technique, since it does not require the simultaneous generation of a high number of simultaneous digital beams, thereby drastically reducing the computational burden on-board.

In addition, in some embodiments the time-dependent phase shifts could be applied in order to produce pattern nulls (zeros) towards specific directions of ambiguous returns, such as the simultaneous return from the other swath side (left or right), as well as simultaneous pulses within the same swath side (in case there is a need to increase the pulse repetition frequency (PRF) for along-track Doppler ambiguity considerations). Increasing the PRF has the beneficial effect of reducing the along-track antenna (azimuth) dimension, of course at the expenses of increased average Tx power.

A time-dependent amplitude beamforming can also be considered, for example in case specific across-track dependent pattern shapes are necessary, or in case dynamic sidelobes control has to be applied.

Without loss of generality, the Tx antenna 510 could be also physically embedded as part of the Rx antenna 520, for example employing only a subset of the Rx sub-apertures 522, or employing all the sub-apertures 522 in order to properly achieve the wanted aperture illumination distribution.

For calibration purposes, in some embodiments two independent and simultaneous nadir altimetry waveforms could be generated with the proposed instrument 50. The first nadir altimetry waveform can be simply obtained by beamforming an additional static nadir pointed beam in the DBFU 530. This can be simply done by coherently summing up the signals received by the different channels, optionally applying amplitude beamforming in case a specific control on pattern shape and sidelobes levels is required. This would allow to extend the swath to the nadir.

The second altimetry waveform can be obtained by embedding an independent classical reference nadir altimeter in the instrument 50. The additional nadir altimeter can be included for example by using the Tx antenna 510 also for the reception of the nadir echo, and by appropriately adding an Rx chain, e.g., within the Tx section 570. The additional Rx chain can comprise a BPF 518', a circulator 519, a LNA 517', and an FDC 516'. An additional ADC 542' can be included in the DBEU 560 for receiving and processing the second nadir altimetry waveform.

The two nadir altimetry waveforms can then be used for instrument calibration purposes, for example on-ground. For example, the delay bias of the multi-channel Rx section may be calibrated compared to a conventional nadir altimeter.

To summarize, the present disclosure proposes a novel radar altimeter technique that is capable of measuring sea surface height over a wide swath in the across-track direction. This technique employs a single Rx antenna and carries out scanning (e.g., very fast scanning) of Rx beams in the direction opposite of the radar pulse travelling on-ground.

Compared to state-of-the-art techniques, the proposed altimetry technique may have several advantages:

- It employs only one antenna on Rx. There is no need to implement any separation of multiple Rx antennas of several meters, as it occurs for interferometric altimeters. This has significant advantages in terms of instrument mass and instrument dimensions, also reducing the associated launch cost for a satellite carrying the instrument,

- It allows to achieve very large swath, even above 200 km (e.g., 100 km left of track and 100 km right of track),

- It requires moderate Tx Power (e.g., 250-500 W peak power), when compared to conventional instrument concepts,

- It allows for re-use of existing processing algorithms. This opens up possibilities for cross calibration/validation with legacy altimeters,

- The proposed wide swath altimeter may also embed a classical altimeter, enabling new possibilities for instrument calibration,

- The proposed concept does not need to transmit sequentially to the left and right swath, since both swaths are illuminated with the same pulse. This brings an improvement of $\sqrt{2}$ on the number of incoherent looks,

- It can allow an increase of the PRF by forming specific dynamic pattern nulls toward the direction of ambiguous pulses on-ground, and

- It gives flexibility in selecting different operative modes, e.g., scanning speed, in order to look for specific geophysical properties (e.g., swells).

Next, technical results including a performance analysis for radar altimeters according to embodiments of the disclosure will be described. The main parameter for performance analysis is the sea surface height random error $\sigma_h$, also referred to as the altimetry precision, which is defined as the standard deviation of the sea surface height estimation. The sea surface height random error $\sigma_h$ may be mainly due to noise contributions such as thermal noise and speckle noise, for example. Additional sources of errors not related to the instrument itself such as ionospheric effects, atmospheric effects, scattering effects (e.g., EM bias, skewness), and uncertainties in the instrument position (e.g., satellite position) are not considered in this analysis, since they are common to all relevant instrument types.

For the purpose of performance analysis, a realistic reference mission has been considered with parameters as shown in **Table I.**

**Table I:** Reference Mission and Instrument Parameters

| Parameter | Value | Unit |
|---|---|---|
| Altimeter Orbit Altitude | 750 | km |
| Center Frequency | 35.75 | GHz |
| Tx Peak Power | 250-1000 | W |
| Tx Antenna Size | 2.2×0.1 (AT × XT) | m$^2$ |
| Rx Antenna Size | 1×1 (AT × XT) | m$^2$ |
| Chirp Pulse Bandwidth | 50-200 | MHz |
| Chirp Pulse Length | 6.6 | us |
| Receiver Noise Figure | 4 | dB |
| Tx Losses (from HPA to Ant O/P) | 2 | dB |
| Pulse Repetition Frequency | 10 | kHz |
| Rx Beam Scanning Speed | (50-200)×pulse speed | deg/us |
| $\sigma_0$ (sigma0) | 10@0 deg, 8@9 deg | dB |
| Wind Speed at 10 m (*U10*) | 7 | m/s |
| Significant Wave Height | 2 | m |

When denoting the power altimetry waveform obtained by the *i*-th Rx across-track beam at delay $\tau$ with $Y_i(\tau)$, the standard deviation $\sigma_{h,i}$ of the height estimation for the *i*-th waveform can be expressed by the following analytical model

$$\sigma_{h,i} = \frac{c}{2\cos(\theta_i)\sqrt{N_{inc}}}\left(\frac{\partial Y_i(\tau)}{\partial \tau}\right)^{-1}\sqrt{\left(1+\frac{1}{SNR}\right)^2 + \left(\frac{1}{SNR}\right)^2}, \qquad (7)$$

where $\theta_i$ is the local incidence angle of the Rx beam, c is the speed of light, *SNR* is the signal to noise ratio on the altimetry waveform and $N_{inc}$ is the number of waveforms incoherently averaged within the wanted along-track and across-track spatial resolution.

From equation (7) it can be seen that the height precision improves proportionally with the slope of the leading edge ($\partial Y_i(\tau)/\partial \tau$), which is in turn directly dependent on the chirp pulse bandwidth. Therefore, the larger the pulse bandwidth, the better the height precision. As expected, the height precision also improves as $\sqrt{N_{inc}}$, being an incoherent integration element reducing speckle noise. The height precision also improves with *SNR* as shown in the third factor of equation (7).

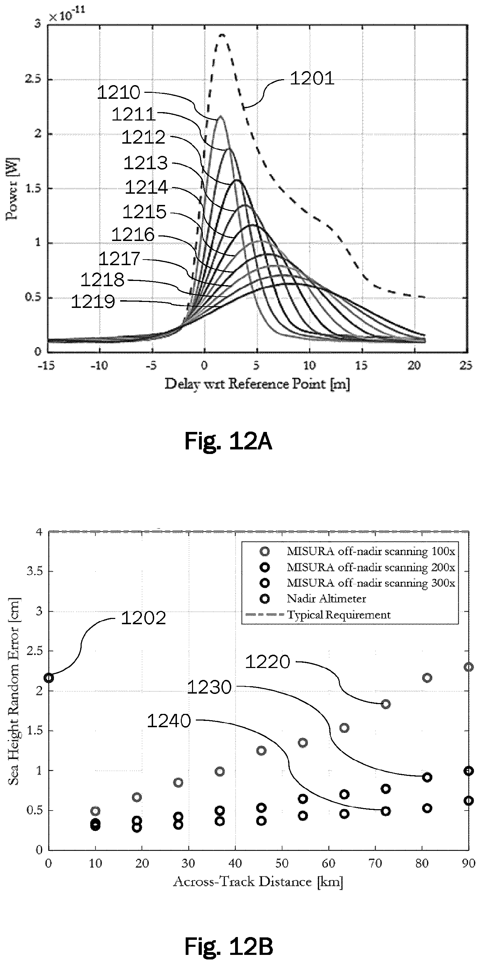

**Fig. 12A** shows a set of ten reference altimetry waveforms 1210 to 1219 acquired at different across-track positions from 10 km to 90 km, for the proposed instrument with Tx power of 500 W, chirp pulse bandwidth of 100 MHz and Rx beam scanning speed 100 times the speed of the radar pulse on the ground. The nadir altimetry waveform 1201 acquired by the reference altimeter is also depicted. The delay of the altimetry waveforms due to the spherical curvature of the radar pulse and sea surface has been corrected in the figure for plotting purposes, in order to align the altimetry waveforms in delay / range.

It can be observed, as expected, that the altimetry waveforms degrade with across-track distance (or elevation angle), in particular for what concerns the signal-to-noise ratio and the leading edge slope. Both parameters primarily affect the achievable altimetry performance with waveforms acquired at the edge of the across-track swath, and, therefore the maximum achievable across-track swath.

The corresponding height precision as function of the across-track position is shown in **Fig. 12B.** Circles 1220 indicate the sea height random error for a scanning speed of 100×pulse speed on ground, circles 1230 indicate the sea height random error for a scanning speed of 200×pulse speed on ground, and circles 1240 indicate the sea height random error for a scanning speed of 300×pulse speed on ground. The height precision corresponds to a spatial resolution cell of 1 km×1 km AT/XT (Along Track/Across-Track). The performance of the nadir altimeter (circle 1202) is also provided as reference. It shall be noted that for a nadir altimeter, there is no possibility to carry out multi-look (incoherent averaging) across track.

As reference, for scanning speeds of 100, 150, 200 and 300 times the pulse speed on ground, the number of across-track incoherent looks $N_{inc}$ within 1 km is about 18, 26, 36, and 54, respectively. This brings a substantial height precision improvement of a factor 4 to 7, compared to the retrieval of a single waveform. This explains the improvement of altimetry performance for near across-track off-nadir waveforms with respect to nadir altimetry.

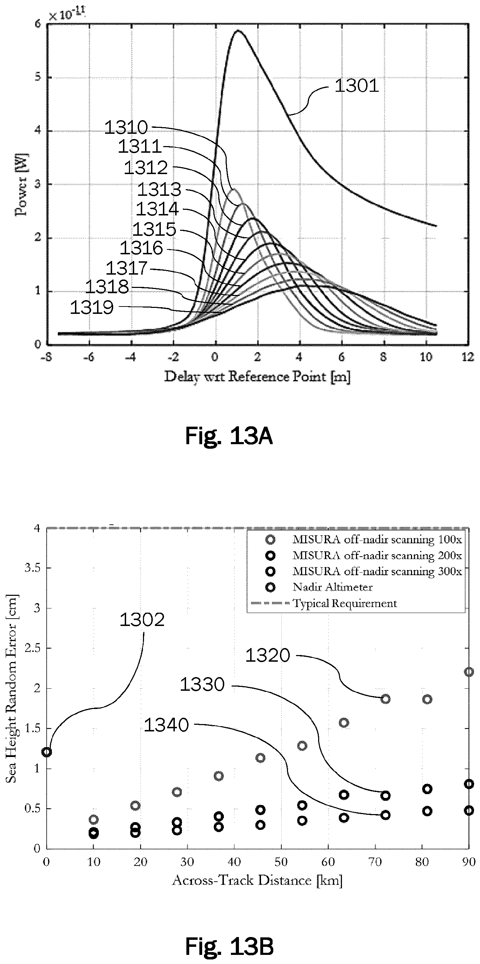

**Fig. 13A** shows a set of ten reference altimetry waveforms 1310 to 1319 acquired at different across-track positions from 10 km to 90 km, for the proposed instrument with Tx power of 1 kW, chirp pulse bandwidth of 200 MHz and Rx beam scanning speed 200 times the speed of the radar pulse on the ground. The nadir altimetry waveform 1301 acquired by the reference altimeter is also depicted. The delay of the altimetry waveforms due to the spherical curvature of the radar pulse and sea surface has been corrected in the figure for plotting purposes, in order to align the altimetry waveforms in delay / range.

The corresponding height precision as function of the across-track position is shown in **Fig. 13B.** Circles 1320 indicate the sea height random error for a scanning speed of 100×pulse speed on ground, circles 1330 indicate the sea height random error for a scanning speed of 200×pulse speed on ground, and circles 1340 indicate the sea height random error for a scanning speed of 300×pulse speed on ground. The height precision corresponds to a spatial resolution cell of 1 km×1 km AT/XT (Along Track/Across-Track). The performance of the nadir altimeter (circle 1302) is also provided as reference.

It can be observed that the height precision increases with the Rx scanning speed, but degrades when reducing the Tx peak power. It must be noted however that in all configurations, the performance of the proposed instrument is well within the typical requirements for wide-swath ocean altimetry.

It is understood that methods and apparatus according to embodiments of the disclosure are not only applicable to radar altimetry of the sea surface, but also other surfaces of the Earth, including deserts, for example.

It is further understood that any circuitry, units, or blocks described above may be implemented by a computer processor or respective computer processors, or the like.

It should further be noted that the description and drawings merely illustrate the principles of the proposed method and system. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed method and system. Furthermore, all statements herein providing principles, aspects, and embodiments of the invention, as well as specific examples thereof, are intended to encompass equivalents thereof.

## Claims

1. A method of performing satellite-based radar altimetry, comprising:

    emitting a radar pulse towards an ocean surface in a first beam;
    receiving an echo of the radar pulse, after reflection off the ocean surface, in a second beam among one or more second beams, and obtaining a signal indicative of an amplitude of the echo over time; and
    determining a return time of the echo based on the obtained signal,
    wherein the second beam is scanned with a scanning motion in a scanning direction orthogonal to a ground track of the satellite, and the echo of the radar pulse is received during the scanning motion of the second beam.

2. The method according to claim 1, wherein the second beam is scanned in the direction orthogonal to the ground track of the satellite, from a maximum angular excursion from nadir, towards nadir.

3. The method according to any one of the preceding claims, wherein a scan speed of the scanning motion of the second beam depends on a propagation speed, along the ocean surface, of a locus at which the radar pulse impinges on the ocean surface.

4. The method according to the preceding claim, wherein the scan speed depends on an angle of excursion of the second beam from nadir; and optionally
wherein the scan speed is higher for a small angle of excursion from nadir and lower for a large angle of excursion from nadir.

5. The method according to claim 3 or 4, wherein the scan speed is a predetermined multiple of the propagation speed, along the ocean surface, of the locus at which the radar pulse impinges on the ocean surface.

6. The method according to any one of the preceding claims, wherein the radar pulse is a chirp pulse with a predetermined frequency profile;
the second beam is generated by means of digital beamforming, using an array antenna with a plurality of sub-apertures;
the digital beamforming comprises applying time-dependent phase shifts to the echo signals received by respective sub-apertures to cause the scanning motion of the second beam, and further comprises applying frequency-dependent phase shifts to said echo signals, such that different frequency components of the echo add up constructively in the obtained signal for different pointing directions within the second beam;
frequencies of the frequency components of the echo for which there is constructive interference vary for pointing directions from a leading edge of the second beam in the scanning direction to a trailing edge of the second beam in the scanning direction in accordance with the frequency profile of the chirp pulse.

7. The method according to any one of the preceding claims, comprising:

    receiving echoes of the radar pulse, after reflection off the ocean surface, in a plurality of second beams, and obtaining respective signals indicative of amplitudes of the echoes over time; and
    determining return times of the echoes based on the respective obtained signals,
    wherein the second beams are scanned with scanning motions in a direction orthogonal to a ground track of the satellite, and the echoes of the radar pulse are received during the scanning motions of the second beams.

8. The method according to claim 7, wherein only those second beams are active at a time that point towards a location on the ocean surface that is expected to be currently illuminated by the radar pulse; and/or
wherein determining return times of the echoes based on the respective obtained signals involves determining differences between signals obtained for pairs of consecutive second beams among the plurality of second beams.

9. The method according to any one of the preceding claims, wherein the first beam is a wide beam; and/or the first beam is pointed in the nadir direction.

10. The method according to any one of the preceding claims, wherein the one or more second beams include a beam that is fixedly pointed in the nadir direction.

11. The method according to any one of the preceding claims, further comprising:
calculating a distance to a location on the ocean surface that is covered by the second beam at the determined return time.

12. An apparatus for performing satellite-based radar altimetry, comprising:

a first antenna for emitting a radar pulse towards an ocean surface in a first beam;
a second antenna for receiving an echo of the radar pulse, after reflection off the ocean surface, in a second beam among one or more second beams, wherein the second antenna is an array antenna comprising a plurality of sub-apertures; and
a beamforming unit coupled to the second antenna for processing echo signals received by respective sub-apertures,
wherein the beamforming unit is adapted to

apply time-dependent phase shifts to the echo signals received by respective sub-apertures to cause a scanning motion of the second beam in a scanning direction orthogonal to a ground track of the satellite; and
sum the phase-shifted echo signals for obtaining a signal indicative of an amplitude of the echo of the radar pulse over time; and

the echo of the radar pulse is received during the scanning motion of the second beam.

13. The apparatus according to claim 12, wherein the second beam is scanned in the direction orthogonal to the ground track of the satellite, from a maximum angular excursion from nadir, towards nadir.

14. The apparatus according to claim 12 or 13, wherein a scan speed of the scanning motion of the second beam depends on a propagation speed, along the ocean surface, of a locus at which the radar pulse impinges on the ocean surface.

15. The apparatus according to any one of claims 12 to 14, wherein the radar pulse is a chirp pulse with a predetermined frequency profile;
the beamforming unit is further adapted to apply frequency-dependent phase shifts to the echo signals received by respective sub-apertures of the second antenna, such that different frequency components of the echo of the radar pulse add up constructively in the obtained signal for different pointing directions within the second beam; and
frequencies of the frequency components of the echo for which there is constructive interference vary for pointing directions from a leading edge of the second beam in the scanning direction to a trailing edge of the second beam in the scanning direction in accordance with the frequency profile of the chirp pulse.

Fig. 1

**Fig. 2**

**Fig. 3A**

*Off-Nadir Altimetry Waveform Y(t)*

**Fig. 3B**

Fig. 4A

Fig. 4B

Fig. 5A

Fig. 5B

Fig. 6A

Fig. 6B

Fig. 7

Fig. 8

**Fig. 9**

**Fig. 10A**

**Fig. 10B**

**Fig. 11**

**Fig. 12A**

**Fig. 12B**

Fig. 13A

Fig. 13B

Europäisches
Patentamt

European
Patent Office

Office européen
des brevets

## EUROPEAN SEARCH REPORT

**Application Number**

EP 20 16 8241

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUANGBAO YANG ET AL: "The feasibility of a multibeam delay/Doppler radar altimeter", ADVANCES IN RESIST TECHNOLOGY AND PROCESSING XVI, vol. 7841, 9 September 2009 (2009-09-09), page 78410G, XP055729285, US ISSN: 0277-786X, DOI: 10.1117/12.873210 ISBN: 978-1-5106-3857-0 * page 4 - page 7; figures 3-5 * | 1-15 | INV. G01S13/88 G01S13/42 |
| A | ZAUGG D A ET AL: "Ocean surface and landslide probing with a scanning radar altimeter", GEOSCIENCE AND REMOTE SENSING SYMPOSIUN, 2000. PROCEEDINGS. IGARSS 200 0. IEEE 2000 INTERNATIONAL 24-28 JULY 2000, PISCATAWAY, NJ, USA,IEEE, vol. 1, 24 July 2000 (2000-07-24), pages 120-122, XP010506093, ISBN: 978-0-7803-6359-5 * the whole document * | 1-15 | |
| A | CN 107 102 329 A (WANG HUI) 29 August 2017 (2017-08-29) * the whole document * | 1-15 | TECHNICAL FIELDS SEARCHED (IPC) G01S |

The present search report has been drawn up for all claims

| Place of search | Date of completion of the search | Examiner |
|---|---|---|
| Munich | 9 September 2020 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 16 8241

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2020

| Patent document cited in search report | Publication date | Patent family member(s) | Publication date |
|---|---|---|---|
| CN 107102329 A | 29-08-2017 | NONE | |

For more details about this annex : see Official Journal of the European Patent Office, No. 12/82

EPO FORM P0459